# EUROPÄISCHE PATENTSCHRIFT

(11) **EP 3 102 728 B1**
(45) Veröffentlichungstag und Bekanntmachung des Hinweises auf die Patenterteilung: **25.08.2021**
(21) Anmeldenummer: 15705219.2
(22) Anmeldetag: 02.02.2015
(51) Int. Cl.: D06F 37/26, D06F 39/12

(54) **HAUSHALTSGERÄT**
HOUSEHOLD APPLIANCE
APPAREIL MÉNAGER

(30) Priorität: 04.02.2014 DE 102014201926
(43) Veröffentlichungstag der Anmeldung: 14.12.2016
(60) Teilanmeldung: 16192137.4
(73) Patentinhaber: BSH Hausgeräte GmbH, 81739 München (DE)
(72) Erfinder: LEO, Sebastian, 14197 Berlin (DE)
(86) Internationale Anmeldenummer: PCT/EP2015/052049
(87) Internationale Veröffentlichungsnummer: WO 2015/117917

(56) Entgegenhaltungen:
- EP-A1- 1 918 448
- WO-A1-2012/068646
- WO-A2-2007/021082
- DE-A1-102006 059 452
- DE-A1-102009 002 774

## Beschreibung

Die vorliegende Erfindung betrifft ein Haushaltsgerät mit einer Haltevorrichtung zum Befestigen elektrischer Baukomponenten wie eine Innenraumbeleuchtung oder ein Elektronikgehäuse an einer Innenwand des Haushaltsgeräts.

In bekannten Haushaltsgeräten sind elektrische Baukomponenten wie Innenraumleuchten oder Elektronikgehäuse mittels eines Halters an einer Innenwand des Haushaltsgeräts angeclipst, angeschraubt öder angeklebt.

In Dokument DE 10 2006 059 452 A1 ist eine Waschvorrichtung mit einem Bedienfeld offenbart, das mittels eines Feldrahmens, der Magnete aufweist, an der Waschvorrichtung befestigt werden kann.

Es ist die der Erfindung zugrunde liegende Aufgabe ein Haushaltsgerät anzugeben, bei dem elektrische Baukomponenten wie eine Innenraumbeleuchtung oder ein Elektronikgehäuse im Innenraum des Haushaltsgeräts befestigt werden ohne während des Betriebs des Haushaltsgeräts Geräusche zu erzeugen oder andere Komponenten im Innenraum des Haushaltsgeräts zu beschädigen.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Haushaltsgerät mit einer elektrischen Baukomponente gelöst, die eine Haltevorrichtung zum Befestigen der elektrischen Baukomponente an einer Innenwand des Haushaltsgeräts umfasst, wobei die Haltevorrichtung ein Magnetelement zum Erzeugen einer magnetischen Anziehungskraft und die Innenwand ein ferromagnetisches Material zum Befestigen des Magnetelements umfasst. umfasst, und wobei die Haltevorrichtung ein Dichtmittel zum Abdichten einer Türöffnung unterstützt.

Dadurch wird der technische Vorteil erreicht, dass das Dichtmittel durch die Haltevorrichtung zusätzlich befestigt wird, und
dass für die

Montage an die Gehäusewand keine zusätzlichen Handgriffe, wie beispielsweise bei geclipsten, geklebten oder geschraubten Haltern, notwendig sind. Des Weiteren wird durch den Einsatz des Magnetelemerits Geräuschentwicklung und Beschädigung an umliegenden Bauteilen vorgebeugt. Ferner kann durch den Einsatz des Magnetelements vermieden werden, dass von der Außenseite des Haushaltsgeräts sichtbare Verschraubungen oder Verclipsungen notwendig und somit auch sichtbar wären. Ein weiterer Vorteil liegt in einer vereinfachten Montage begründet, da auch an den umliegenden Bauteilen keine Veränderungen wie Entgratungen zur Anclipsbarkeit eines Halters oder vorbereitende Maßnahmen zum Positionieren vorgenommen werden müssen. Es wird im Vergleich zu bekannten Klebe-Lösungen die Lebensdauer der Haltevorrichtung deutlich erhöht.

Unter einem Haushaltsgerät wird insbesondere ein Haushaltsgerät verstanden, das zur Haushaltsführung in Haushalten oder im Gastronomiebereich eingesetzt wird und insbesondere dazu dient Wäsche, Bekleidung oder auch Geschirr und Küchenartikel zu reinigen beziehungsweise zu waschen. Das kann ein Haushaltsgerät sein, wie beispielsweise eine Waschmaschine, ein Wäschetrockner, eine Geschirrspülmaschine, ein Gargerät, oder ein Kältegerät, wie z.B. ein Kühlschrank, ein Gefrierschrank oder eine Kühlgefrierkombination.

In einer weiteren vorteilhaften Ausführungsform ist die Haltevorrichtung zum Befestigen der elektrischen Baukomponente an einem Gehäusedeckel oder einem Gehäuseboden des Haushaltgeräts befestigt. Dadurch wird beispielsweise der technische Vorteil erreicht, dass die Befestigung der Haltevorrichtung nicht nur an den Wänden des Haushaltgeräts erfolgen kann sondern ebenso an einem Gehäusedeckel oder Gehäuseboden.

In einer weiteren vorteilhaften Ausführungsform ist die elektrische Baukomponente ein Leuchtmittel zum Beleuchten eines Innenraums des Haushaltgeräts. Dadurch wird beispielsweise der technische Vorteil erreicht, dass auch schlecht einsehbare bzw. ausgeleuchtete Bereiche des Innenraums des Haushaltsgeräts beleuchtet werden und ein Nutzer einen verbesserten Einblick in den Innenraum erhält.

In einer weiteren vorteilhaften Ausführungsform umfasst das Dichtmittel zum Abdichten der Türöffnung eine Fassung zur Aufnahme des Leuchtmittels. Dadurch wird beispielsweise der technische Vorteil erreicht, dass das Leuchtmittel durch Vibrationen und Bewegungen im Betrieb des Haushaltsgeräts keine Geräusche verursacht oder das Dichtmittel beschädigt.

In einer weiteren vorteilhaften Ausführungsform ist die Fassung zum Innenraum des Haushaltsgeräts hin verschlossen und umfasst einen transparenten Bereich, welcher ein Durchdringen von Licht des Leuchtmittels in den Innenraum ermöglicht. Dadurch wird beispielsweise der technische Vorteil erreicht, dass das Leuchtmittel besser vor mechanischen Einwirkungen als auch vor Wasser oder Verunreinigungen geschützt wird. Dies erhöht die Lebensdauer des Leuchtmittels.

In einer weiteren vorteilhaften Ausführungsform besteht das Dichtmittel aus einem transparenten Material. Dadurch wird beispielsweise der technische Vorteil erreicht, dass das Dichtmittel einfacher und somit auch preisgünstiger hergestellt werden kann.

In einer weiteren vorteilhaften Ausführungsform umfasst die Haltevorrichtung zusätzlich ein Klebemittel um die Haltekraft der magnetischen Verbindung zu erhöhen. Dadurch wird beispielsweise der technische Vorteil erreicht, dass sowohl die Vorzüge einer vereinfachten Montage der Haltevorrichtung mittels des Magneten als auch eine verbesserte Fixierung des Leuchtmittels durch Klebstoffeinwirkung realisiert werden kann. In der Konsequenz kann auch eine erhöhte Bindezeit des Klebstoffs während der Montage der Haltevorrichtung toleriert werden.

In einer weiteren vorteilhaften Ausführungsform umfasst das Haushaltsgerät mehrere Haltevorrichtungen mit Leuchtmitteln, wobei die Haltevorrichtungen mit den Leuchtmitteln entlang des Umfangs der Türöffnung angeordnet sind. Dadurch wird beispielsweise der technische Vorteil erreicht, dass die Beleuchtung des Innenraums des Haushaltsgeräts gründlicher bzw. vollständig erfolgt.

In einer weiteren vorteilhaften Ausführungsform ist das Haushaltsgerät eine Waschmaschine und das Dichtmittel ist eine Manschette. Dadurch wird beispielsweise der technische Vorteil erreicht, dass das Leuchtmittel leicht zu Montieren ist und als Trommelbeleuchtung eingesetzt werden kann, wobei im Betrieb der Waschmaschine durch die Haltevorrichtung das Leuchtmittel weder Geräusche verursacht noch durch Bewegung des Leuchtmittels die Manschette beschädigt wird.

In einer weiteren vorteilhaften Ausführungsform ist die elektrische Baukomponente ein Elektronikgehäuse. Dadurch wird beispielsweise der technische Vorteil erreicht, dass Geräuschentwicklung oder Beschädigungen durch die Berührung des Elektronikgehäuses mit dem Gehäuse oder anderen Komponenten des Haushaltsgeräts unterbunden werden.

In einer weiteren vorteilhaften Ausführungsform umfasst die Haltevorrichtung ein Befestigungsmittel, welches an der Innenwand des Haushaltsgeräts befestigt ist. Dadurch wird beispielsweise der technische Vorteil erreicht, dass neben dem Magnetelement eine zusätzliche Fixierung des Elektronikgehäuses möglich ist, womit das Elektronikgehäuse in der Konsequenz besser befestigt ist.

In einer weiteren vorteilhaften Ausführungsform sind das Befestigungsmittel und das Magnetelement an verschiedenen Innenwänden des Haushaltsgeräts befestigt. Dadurch wird beispielsweise der technische Vorteil erreicht, dass an derjenigen Innenwand, an welcher das Magnetelement angreift, keine äußerlich sichtbaren Verschraubungen oder Verclipsungen an dem Haushaltsgerät notwendig sind. Mit anderen Worten leistet diese Ausführungsform einen Beitrag zur Ästhetik des Haushaltsgeräts.

In einer weiteren vorteilhaften Ausführungsform schließen die Innenwände auch den Gehäuseboden oder den Gehäusedeckel ein. Dadurch wird beispielsweise der technische Vorteil erreicht, dass ein Elektronikgehäuse mit dem Befestigungsmittel beispielsweise am Gehäuseboden festgeschraubt werden kann, wobei das Magnetelement, welches beispielsweise an der Vorderwand des Haushaltsgeräts fixiert ist, eine Geräuschentwicklung oder Beschädigung durch das Elektronikgehäuse unterbindet. Auch durch diese Ausführungsform wird beispielsweise der technische Vorteil erreicht, dass an derjenigen Innenwand, an welcher das Magnetelement angreift, keine äußerlich sichtbaren Verschraubungen oder Verclipsungen an dem Haushaltsgerät notwendig sind. Diese befinden sich lediglich am Gehäuseboden und sind somit im Betrieb des Haushaltsgeräts äußerlich nicht sichtbar. Mit anderen Worten leistet auch diese Ausführungsform einen Beitrag zur Ästhetik des Haushaltsgeräts.

In einer weiteren vorteilhaften Ausführungsform ist das Magnetelement in das Elektronikgehäuse integriert. Dadurch wird beispielsweise der technische Vorteil erreicht, dass das Magnetelement nicht gesondert äußerlich an dem Elektronikgehäuse befestigt zu werden braucht. Durch das Integrieren des Magnetelements in das Elektronikgehäuse wird die Montage des Elektronikgehäuses in das Haushaltsgerät erheblich vereinfacht.

Ausführungsbeispiele der Erfindung sind in der Zeichnung/den Zeichnungen dargestellt und werden im Folgenden näher beschrieben.

Es zeigen:
Fig. 1 eine schematische Querschnittsansicht einer Haltevorrichtung zum Befestigen eines Leuchtmittels,
Fig. 2 eine schematische Querschnittsansicht einer weiteren Haltevorrichtung zum Befestigen eines Elektronikgehäuses,
Fig. 3 eine schematische perspektivische Ansicht einer weiteren Haltevorrichtung zum Befestigen eines Elektronikgehäuses.

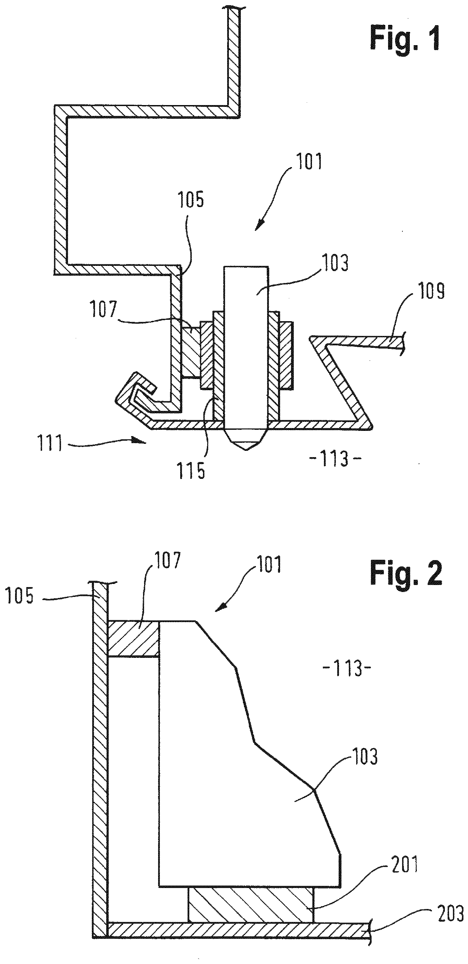

Figur 1 zeigt eine schematische Querschnittsansicht einer Haltevorrichtung 101 zum Befestigen eines Leuchtmittels 103. Die Haltevorrichtung 101 mit dem Leuchtmittel 103 ist in dieser bevorzugten Ausführungsform an der Innenwand 105 eines Haushaltsgeräts in Form einer Waschmaschine befestigt, um als Trommelbeleuchtung insbesondere die schlecht einsehbaren Bereiche der Waschmaschinentrommel zu beleuchten und einem Nutzer einen verbesserten Einblick in den Innenraum 113 zu ermöglichen. In der in Figur 1 dargestellten Ausführungsform ist das Gehäuse der Waschmaschine mit einem einfachen ferromagnetischen Material wie z.B. Stahl ausgebildet um mit dem Magnetelement 107 der Haltevorrichtung 101 in Wechselwirkung treten zu können. Ebenso wäre es jedoch denkbar, dass das Waschmaschinengehäuse aus irgendeinem anderen Material ggf. aus Kunststoff oder Aluminium hergestellt werden kann. In diesem Fall müsste jedoch ein zusätzliches ferromagnetisches Mittel an dem Gehäuse befestigt werden um die notwendigen magnetischen Wechselwirkungen mit dem Magnetelement 107 zu ermöglichen. Dies wäre beispielsweise mit einem Metallblech oder einem vergleichbaren Mittel möglich.

Des Weiteren ist die Haltevorrichtung 101 bzw. das Magnetelement 107 in Figur 1 an einem vertikal ausgerichteten Innenwandabschnitt befestigt. Es wäre jedoch auch denkbar, die Haltevorrichtung 101 so auszubilden, dass diese an einem horizontal oder sonstig ausgerichteten Innenwandabschnitt befestigt werden kann. Hierbei könnte die Haltevorrichtung 101 auch mehrere Magnetelemente 107 umfassen, um entsprechend mehr Flexibilität bei der Montage und der konkret vorliegenden Ausgestaltung der Innenwand 105 zu gewinnen.

Am unteren Ende der in Figur 1 dargestellten Innenwand 105 ist schematisch die Türöffnung 111 der Waschmaschine dargestellt, wobei sich diese in einem geöffneten Zustand befindet und die Waschmaschinentür nicht dargestellt ist. Zur Abdichtung der Türöffnung 111 ist anschließend an die Innenwand 105 ein Dichtmittel 109 in Form einer Manschette angeordnet, welche zusätzlich durch die Haltevorrichtung 101 unterstützt ist. In dieser Ausführungsform weist die Manschette 109 eine vertikal ausgerichtete Fassung 115 auf, welche das Leuchtmittel 103 in sich aufnimmt. Die Haltevorrichtung 101 umgreift sowohl das Leuchtmittel 103 als auch die vertikale Fassung 115 der Manschette 109. Somit ist die Manschette 109 durch die Haltevorrichtung 101 an das Gehäuse der Waschmaschine bzw. an deren Innenwand 105 besonders zuverlässig befestigt. In der Konsequenz wird effektiv der Geräuschentwicklung durch das Leuchtmittel 103 entgegengewirkt und es wird ferner verhindert, dass das Leuchtmittel 103 durch Bewegung die Manschette 109 beschädigt.

In der vorliegenden Ausführungsform ist die Fassung 115 der Manschette 109 nach unten hin, also in den Innenraum 113 der Waschmaschine, offen ausgebildet. Die geöffnete Fassung 115 ermöglicht somit, dass das Licht des Leuchtmittels 103 ungehindert in den Innenraum 113 der Waschmaschine eindringen kann. Alternativ wäre es jedoch auch denkbar die Manschette 109 nach unten hin geschlossen auszubilden, wobei die Manschette 109 dann am unteren Ende der Fassung 115 einen transparenten Bereich ausweisen müsste, welcher ein Durchdringen von Licht des Leuchtmittels 113 in den Innenraum 113 ermöglicht. Ebenso wäre es denkbar die gesamte Manschette 109 aus einem transparenten Material auszubilden (nicht gezeigt) um beispielsweise den Herstellungsprozess zu vereinfachen.

Üblicher Weise sind die bekannten Manschetten in Abstimmung mit der gewöhnlich rund ausgebildeten Waschmaschinentür (nicht gezeigt) kreisförmig entlang der Türöffnung 111 ausgebildet. Eine Haltevorrichtung 101 mit einem Leuchtmittel 103 wie sie in Figur 1 gezeigt ist, kann auch an mehreren Stellen der Manschette 109 angeordnet sein. Bevorzugter Weise sind die mehreren Haltevorrichtungen 101 mit den Leuchtmitteln 103 entlang des Umfangs der Türöffnung 111 angeordnet.

Figur 2 zeigt eine schematische Querschnittsansicht einer weiteren Haltevorrichtung 101 zum Befestigen eines Elektronikgehäuses 103. Das Elektronikgehäuse 103 weist am unteren Ende ein Befestigung 201 auf, mit welcher es am Gehäuseboden 203 befestigt ist. Das Befestigen kann hierbei mittels einer Verschraubung, einer Verklebung, einer Verclipsung oder einem sonstigen geeigneten Mittel erfolgen. Zusätzlich ist an dem oberen Ende des Elektrogehäuses 103 ein Magnetelement 107 angeordnet, welches mit einer Innenwand 105 des Haushaltsgeräts in magnetischer Wechselwirkung steht. Das Elektrogehäuse 103 ist somit geräuschvermeidend an der Innenwand 105 befestigt ohne dabei Verschraubungen oder Verclipsungen einzusetzen, welche von der Außenseite des Gehäuses sichtbar wären. Zusätzlich wird durch die Befestigung Beschädigungen anderer Komponenten unterbunden.

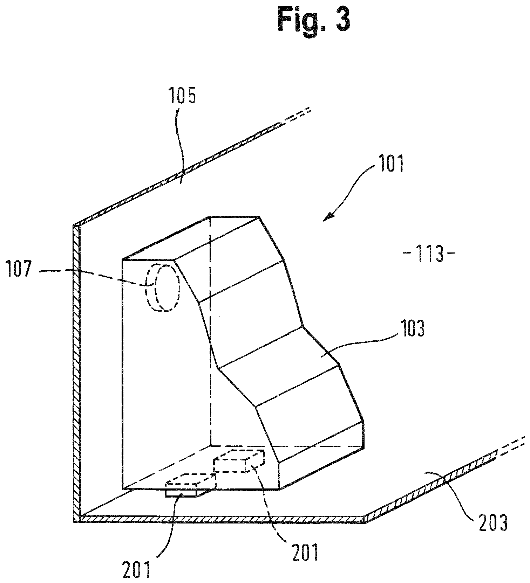

Figur 3 zeigt eine schematische perspektivische Ansicht einer weiteren Haltevorrichtung 101 zum Befestigen eines Elektronikgehäuses 103. Auf eine wiederholte Beschreibung der mit der Figur 2 übereinstimmenden Merkmale wird verzichtet. Die Haltevorrichtung 101 verfügt insgesamt über zwei Befestigungsmittel 201, welche am Gehäuseboden 203 befestigt sind. Zusätzlich befindet sich ein Magnetelement 107 an einem seitlichen oberen Ende des Elektrogehäuses 103 und ist an der Innenwand 105 befestigt. Mit dieser Anordnung von Befestigungsmitteln 201 und dem Magnetelement 107 kann eine Geräuschentwicklung und Beschädigung anderer Komponenten durch das Elektrogehäuse 103 unterbunden werden. Des Weiteren sind auch in dieser Ausführungsform keine Verschraubungen oder Verclipsungen an äußerlich sichtbaren Flächenstücken des Waschmaschinengehäuses notwendig. Derartige sichtbare Verschraubungen oder Verclipsungen werden lediglich für die Befestigungsmittel 201 eingesetzt, die sich am nicht-sichtbaren Gehäuseboden 203 befinden. Folglich unterdrückt das Magnetelement 107 effektiv die Geräuschentwicklung und den Verschleiß bzw. die Beschädigung des Elektrogehäuses 103 sowie anderer Komponenten und erhöht gegenüber einer klebetechnischen oder geclipsten Befestigungslösung die Lebensdauer der Haltevorrichtung 101. Zusätzlich wird ästhetischen Gesichtspunkten Rechnung getragen indem äußerlich sichtbare Flächenbereiche des Waschmaschinengehäuses unberührt bleiben.

Des Weiteren wäre es ebenso denkbar, die erfindungsgemäße Haltevorrichtung nicht nur zur Befestigung elektrischer Baukomponenten sondern auch zur Befestigung von nichtelektrischen Komponenten, wie beispielsweise Kabelkanäle oder Wasserschläuche, einzusetzen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Haushaltsgerät
- 101: Haltevorrichtung
- 103: elektrische Baukomponente
- 105: Innenwand
- 107: Magnetelement
- 109: Dichtmittel
- 111: Türöffnung
- 113: Innenraum
- 115: Fassung
- 201: Befestigungsmittel
- 203: Gehäuseboden

## Patentansprüche

1. Haushaltsgerät (100) mit einer elektrischen Baukomponente (103), die eine Haltevorrichtung (101) zum Befestigen der elektrischen Baukomponente (103) an einer Innenwand (105) des Haushaltsgeräts (100) umfasst, wobei die Haltevorrichtung (101) ein Magnetelement (107) zum Erzeugen einer magnetischen Anziehungskraft und die Innenwand (105) ein ferromagnetisches Material zum Befestigen des Magnetelements (107) umfasst, **dadurch gekennzeichnet, dass** die Haltevorrichtung (101) ein Dichtmittel (109) zum Abdichten einer Türöffnung (111) unterstützt.

2. Haushaltsgerät (100) nach Anspruch 1, **dadurch gekennzeichnet, dass** die Haltevorrichtung (101) zum Befestigen der elektrischen Baukomponente (103) an einem Gehäusedeckel oder einem Gehäuseboden des Haushaltgeräts (100) befestigt ist.

3. Haushaltsgerät (100) nach einem der vorangehenden Ansprüche, **dadurch gekennzeichnet, dass** die elektrische Baukomponente (103) ein Leuchtmittel zum Beleuchten eines Innenraums (113) des Haushaltgeräts (100) ist.

4. Haushaltsgerät (100) nach Anspruch 3, **dadurch gekennzeichnet, dass** das Dichtmittel (109) zum Abdichten der Türöffnung (111) eine Fassung (115) zur Aufnahme des Leuchtmittels umfasst.

5. Haushaltsgerät (100) nach Anspruch 4, **dadurch gekennzeichnet, dass** die Fassung (115) zum Innenraum (113) des Haushaltsgeräts hin verschlossen ist und einen transparenten Bereich umfasst, welcher ein Durchdringen von Licht des Leuchtmittels in den Innenraum (113) ermöglicht.

6. Haushaltsgerät (100) nach einem der vorangehenden Ansprüche, **dadurch gekennzeichnet, dass** das Dichtmittel (109) aus einem transparenten Material besteht.

7. Haushaltsgerät (100) nach einem der vorangehenden Ansprüche, **dadurch gekennzeichnet, dass** die Haltevorrichtung (101) zusätzlich ein Klebemittel umfasst, um die Haltekraft der magnetischen Verbindung zu erhöhen.

8. Haushaltsgerät (100) nach einem der vorangehenden Ansprüche, **dadurch gekennzeichnet, dass** das Haushaltsgerät (100) mehrere Haltevorrichtungen (101) mit Leuchtmitteln (103) umfasst, wobei die Haltevorrichtungen (101) mit den Leuchtmitteln (103) entlang des Umfangs der Türöffnung (111) angeordnet sind.

9. Haushaltsgerät (100) nach einem der vorangehenden Ansprüche, **dadurch gekennzeichnet, dass** das Haushaltsgerät (100) eine Waschmaschine ist und das Dichtmittel (109) eine Manschette ist.

10. Haushaltsgerät (100) nach einem der vorangehenden Ansprüche, **dadurch gekennzeichnet, dass** die elektrische Baukomponente (103) ein Elektronikgehäuse ist.

11. Haushaltsgerät (100) nach einem der vorangehenden Ansprüche, **dadurch gekennzeichnet, dass** die Haltevorrichtung (101) ein Befestigungsmittel (201) umfasst, welches an der Innenwand (105) des Haushaltsgeräts (100) befestigt ist.

12. Haushaltsgerät (100) nach Anspruch 11, **dadurch gekennzeichnet, dass** das Befestigungsmittel (201) und das Magnetelement (107) an verschiedenen Innenwänden (105) des Haushaltsgeräts (100) befestigt sind.

13. Haushaltsgerät (100) nach Anspruch 12, **dadurch gekennzeichnet, dass** die Innenwände (105) auch den Gehäuseboden (203) oder den Gehäusedeckel einschließen.

14. Haushaltsgerät (100) nach einem der Ansprüche 10 bis 13, **dadurch gekennzeichnet, dass** das Magnetelement (107) in das Elektronikgehäuse (103) integriert ist.

## Claims

1. Household appliance (100) with an electrical component (103), which comprises a holding device (101) for fastening the electrical component (103) to an inner wall (105) of the household appliance (100), wherein the holding device (101) comprises a magnetic element (107) for generating a magnetic attraction force and the inner wall (105) comprises a ferromagnetic material for fastening the magnetic element (107), **characterised in that** the holding device (101) supports a sealing means (109) for sealing a door opening (111).

2. Household appliance (100) according to claim 1, **characterised in that** the holding device (101) is fastened to a housing cover or a housing base of the household appliance (100) to fasten the electrical component (103).

3. Household appliance (100) according to one of the preceding claims, **characterised in that** the electrical component (103) is a lamp for lighting an interior (113) of the household appliance (100).

4. Household appliance (100) according to claim 3, **characterised in that** the sealing means (109) for sealing the door opening (111) comprises a socket (115) for holding the lamp.

5. Household appliance (100) according to claim 4, **characterised in that** the socket (115) is closed off in the direction of the interior (113) of the household appliance and comprises a transparent region which allows light from the lamp to penetrate into the interior (113).

6. Household appliance (100) according to one of the preceding claims, **characterised in that** the sealing means (109) is made of a transparent material.

7. Household appliance (100) according to one of the preceding claims, **characterised in that** the holding device (101) additionally comprises a bonding means to increase the retaining force of the magnetic connection.

8. Household appliance (100) according to one of the preceding claims, **characterised in that** the household appliance (100) comprises a number of holding devices (101) with lamps (103), wherein the holding devices (101) with the lamps (103) are arranged along the periphery of the door opening (111).

9. Household appliance (100) according to one of the preceding claims, **characterised in that** the household appliance (100) is a washing machine and the sealing means (109) is a gasket.

10. Household appliance (100) according to one of the preceding claims, **characterised in that** the electrical component (103) is an electronic unit housing.

11. Household appliance (100) according to one of the preceding claims, **characterised in that** the holding device (101) comprises a fastening means (201) which is fastened to the inner wall (105) of the household appliance (100).

12. Household appliance (100) according to claim 11, **characterised in that** the fastening means (201) and the magnetic element (107) are fastened to different inner walls (105) of the household appliance (100).

13. Household appliance (100) according to claim 12, **characterised in that** the inner walls (105) also include the housing base (203) or the housing cover.

14. Household appliance (100) according to one of claims 10 to 13, **characterised in that** the magnetic element (107) is integrated in the electronic unit housing (103).

## Revendications

1. Appareil ménager (100) avec un composant structurel électrique (103), qui comprend un dispositif de retenue (101) pour la fixation du composant structurel électrique (103) à une paroi intérieure (105) de l'appareil ménager (100), dans lequel le dispositif de retenue (101) comprend un élément aimanté (107) pour la génération d'une force d'attraction magnétique et la paroi intérieure (105) comprend un matériau ferromagnétique pour la fixation de l'élément aimanté (107), **caractérisé en ce que** le dispositif de retenue (101) soutient un agent d'étanchéité (109) pour l'étanchéification d'une ouverture de porte (111).

2. Appareil ménager (100) selon la revendication 1, **caractérisé en ce que** le dispositif de retenue (101) pour la fixation du composant structurel électrique (103) est fixé sur un couvercle de carcasse ou un fond de carcasse de l'appareil ménager (100).

3. Appareil ménager (100) selon l'une des revendications précédentes, **caractérisé en ce que** le composant structurel électrique (103) est un agent lumineux pour éclairer l'espace intérieur (113) de l'appareil ménager (100).

4. Appareil ménager (100) selon la revendication 3, **caractérisé en ce que** l'agent d'étanchéité (109) pour l'étanchéification de l'ouverture de porte (111) comprend un support (115) pour l'accueil de l'agent lumineux.

5. Appareil ménager (100) selon la revendication 4, **caractérisé en ce que** le support (115) est obturé en direction de l'espace intérieur (113) de l'appareil ménager et comprend une zone transparente, laquelle permet à la lumière de l'agent lumineux de pénétrer dans l'espace intérieur (113).

6. Appareil ménager (100) selon l'une des revendications précédentes, **caractérisé en ce que** l'agent d'étanchéité (109) se compose d'un matériau transparent.

7. Appareil ménager (100) selon l'une des revendications précédentes, **caractérisé en ce que** le dispositif de retenue (101) comprend en outre un adhésif, afin d'accroître la force de retenue de la liaison magnétique.

8. Appareil ménager (100) selon l'une des revendications précédentes, **caractérisé en ce que** l'appareil ménager (100) comprend plusieurs dispositifs de retenue (101) avec des agents lumineux (103), dans lequel les dispositifs de retenue (101) sont disposés avec les agents lumineux (103) sur le pourtour de l'ouverture de porte (111).

9. Appareil ménager (100) selon l'une des revendications précédentes, **caractérisé en ce que** l'appareil ménager (100) est un lave-linge et l'agent d'étanchéité (109) est une coupelle.

10. Appareil ménager (100) selon l'une des revendications précédentes, **caractérisé en ce que** le composant structurel électrique (103) est un boitier électronique.

11. Appareil ménager (100) selon l'une des revendications précédentes, **caractérisé en ce que** le dispositif de retenue (101) comprend un moyen de fixation (201) fixé à la paroi intérieure (105) de l'appareil ménager (100).

12. Appareil ménager (100) selon la revendication 11, **caractérisé en ce que** le moyen de fixation (201) et l'élément aimanté (107) sont fixés à diverses parois intérieures (105) de l'appareil ménager (100).

13. Appareil ménager (100) selon la revendication 12, **caractérisé en ce que** les parois intérieures (105) incluent aussi le fond de carcasse (203) ou le couvercle de carcasse.

14. Appareil ménager (100) selon l'une des revendications 10 à 13, **caractérisé en ce que** l'élément aimanté (107) est intégré au boitier électronique (103).
